(19) Europäisches Patentamt
European Patent Office
Office européen des brevets

(11) **EP 2 530 308 A2**

(12) **EUROPEAN PATENT APPLICATION**

(43) Date of publication:
**05.12.2012 Bulletin 2012/49**

(51) Int Cl.:
**F03D 9/02** (2006.01)          **F03D 7/04** (2006.01)
**F03D 7/02** (2006.01)

(21) Application number: **12170014.0**

(22) Date of filing: **30.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2011 JP 2011119959**

(71) Applicant: **Hitachi Engineering & Services Co., Ltd.**
**Hitachi-shi,**
**Ibaraki 317-0073 (JP)**

(72) Inventors:
• **Takahashi, Masaya**
  **Ibaraki, 317-0073 (JP)**
• **Hoshino, Naoki**
  **Ibaraki, 317-0073 (JP)**
• **Setoguchi, Satoshi**
  **Ibaraki, 317-0073 (JP)**

(74) Representative: **MERH-IP**
**Matias Erny Reichl Hoffmann**
**Paul-Heyse-Strasse 29**
**80336 München (DE)**

(54) **Wind power generation system and method for the installation of an additional wind power generator therein**

(57)     The present invention provides a wind power generation system capable of suppressing an increase in output variation involved in additional installation of a wind power generator without the need for a large storage battery capacity. For example, an output variation rate at a predetermined period of an existing wind power generator 200 in an existing wind-power generating station is determined in advance, and charge/discharge control for a storage battery device 300 is performed to reduce an output variation in a system output of the existing wind power generator 200 so that an output variation rate of the wind-power generating system after the additional installation of the wind power generator 100 does not exceed the determined output variation rate of the existing wind power generator 200.

FIG. 1

EP 2 530 308 A2

**Description**

[Technical Field]

The present invention relates to a wind power generation system and a method for additional installation of a wind power generator (a wind turbine generator) therein.

[Background Art]

There has been known a wind power generator as one of methods for converting recyclable energy existing in the natural world into power energy without using fossil energy having its depletion potential. Since this power generating method is known as a clean energy source which hardly generates $CO_2$, the introduction thereof is rapidly proceeding throughout the world as a process for solving global environmental issues. Power generated by wind power generation is linked to an electric power system (a utility grid) and transmitted to a power company. In the electric power system, the generated output of a large generator such as a thermal power plant or the like lying in the electric power system is adjusted according to the magnitude of electricity demand to thereby balance the electricity demand and supply.

A number of wind power generation producers are already introducing many wind power generators nowadays within the country. The number thereof is further on the increase from now.

A generated output of a wind power generator is proportional to the cube of its area that takes the wind, the density of air and the speed of the wind. Since the wind that serves as its energy source has a large variation in time, a variation in the generated output also increases. Thus, an increase in the introduced number of wind power generators results in causing the electric power system to increase an output variation, so that there occur concerns about shortage of adjusting power in the electric power system and expansion of frequency fluctuations. In particular, variations relative to a few minutes to twenty minutes or so called a middle periodic region cause a large influence in terms of the above concerns. Therefore, there is now becoming a trend that an electric power company calculates the system interconnection allowable capacity for wind power generation and calls for entries according to the capacity and that wind power generation producers apply therefor and a wind power generation producer after having got elected will construct a wind power generator. Thus, there has conventionally been a situation in which so long as the electric power company does not call for entries, it is not possible to newly construct a wind-power generating station or plant (wind-power generating station free of measures against frequency fluctuations).

On the other hand, a system called a free or occasional reception at the electric power company is known aside from the call for entries from the electric power company. According to this system, it is possible to construct a wind-power generating station in accordance with a plan to construct the wind-power generating station by a wind power generation producer without being affected by the time of recruiting and the amount of electric power to be recruited by the electric power company. This becomes a system extremely effective in increasing wind power generators in future.

The system that enables the occasional reception at the electric power company is targeted only for a wind power generator provided with storage batteries (power storage system) at present. Only an output-constant control type wind power generation facility is enabled in particular. The output-constant control type wind power generation facility is a system which determines a post-24 hour power-generating station output in advance while predicting a future wind velocity, stores a generated output in a night parallel-off time zone in the power storage system and performs a prenotification operation. Thus, since there is no affection by the frequency fluctuations due to the wind power generation, the free reception at the electric power company is enabled. Technical requirements in respect to this type, which the electric power company establishes, have been described in, for example, NPTL 1. The technical requirements are that an output variation in the generated output is approximately zero, and the difference between the generated output and an output estimated at a power generation plan is less than or equal to 2% of the maximum generated output.

In order to achieve this, however, a large storage battery capacity is required for the total generated output of wind power generators. There has been described in, for example, PTL 1 that the capacity of a power storage system provided to a wind power generation system is selected to be about 25 to 60% with respect to the rated generation capacity of a wind-power generating station. Actually, as described in, for example, NPTL 2, a 51MW wind power generator has a 34MW storage battery facility. There might be a need to provide a storage battery facility of the same capacity as the rated output of the wind power generator. Thus, in order to realize the free reception of the present situation, i.e., realize the output-constant control type wind power generation facility, there is a need to provide a storage battery facility having at least about 60% of the total generated output of the wind power generators. As a result, there is estimated to be a significant increase in cost equivalent to about 1.6 to 1.7 times the cost of a wind-power generating station called for by the electric power company without the conditions for the measures against the frequency fluctuations.

Incidentally, in PTL 2, a wind power generation system provided with a storage system has been described, which suppresses an output variation and reduces a power loss with the charge/discharge of a storage battery.

[Citation List]

[Patent Literature]

[PTL 1] Japanese Patent Laid-Open No. 2010-51117, Paragraph 0030
[PTL 2] Japanese Patent No. 4551921(Corresponds to EP2230403AI)
[PTL 3] Japanese Patent Laid-Open No. 2007-124780

[Non Patent Literature]

[NPTL 1] "Technical requirements on measures against frequency fluctuations of output-constant control type wind power generation facility", [online], 2011 (Hei 23), Tohoku Electric Power Co., Inc., [Retrieved on May 10, 2011 (Hei 23)], Internet<URL: http://www.tohoku-epco.co.jp/oshirase/newene/04/pdf/h21_01 .pdf>
[NPTL 2] Endo Akira, "Japan Wind Development Co., Ltd. : Trajectory of JWD, First Stage to Fourth Stage", Wind Energy, Japan Wind Energy Association, May 2009 (Hei 21), Vol. 33, No. 1, pg 15 - 21.

[Summary of Invention]

[Technical Problem]

As a method of increasing the generated output of an existing wind-power generating plant, there is considered to additionally install a wind power generator alone. If, however, only the wind power generator is additionally installed in the existing wind-power generating plant, then an output variation of the wind-power generating plant increases in accordance with an output variation of the additionally installed wind power generator, as a matter of course. Therefore, the frequency of power adjustment and load of an electric power company inevitably increase depending on an increase of the output variation of the additionally installed wind power generator. Accordingly, there has not conventionally been considered that only the wind power generator is additionally installed to the existing wind-power generating station. The electric power company has not accepted the additional installation of the wind power generator.
If there is an attempt to additionally install a wind power generator in an existing wind-power generating station and suppress an output variation corresponding to the additionally installed wind power generator, an electric power company has a possibility of accepting (free reception) the additional installation of the wind power generator. When a storage facility having battery capacity corresponding to the generated output of the additionally installed wind power generator is prepared to prevent the output variation corresponding to the additionally installed wind power generator from increasing, the cost becomes high as with the case where a wind-power generating station is newly provided.
The present invention aims to provide a wind power generation system capable of, under a conventionally-unstudied novel concept that a wind power generator(s) is(are) additionally installed in an existing wind-power generating station, suppressing an increase in output variation involved in the additional installation of the wind power generator (s) to thereby prevent a load of an electric power company from increasing, and suppressing an increase in output variation involved in the additional installation of the wind power generator (s) without the need a large storage battery capacity (i.e., at low cost) to thereby prevent a load of a wind power generation producer from increasing, and to provide a method for additional installation of a wind power generator(s) in the wind power generation system.

[Solution to Problem]

The object of the present invention is achieved by estimating an output variation (rate) at a predetermined period (period during which the output variation is relaxed or reduced) of an existing wind-power generating station, and/or performing charge/discharge control on a storage battery device based on the estimated output variation (rate) oftheexistingwind-power generating station in such a manner that an output variation (rate) of an expanded wind-power generating station (a wind-power generating station after additionally installing a wind power generator (s) in the existing wind-power generating station) does not exceed the output variation (rate) of the existing wind-power generating station.
Specifically, the object of the present invention is achieved by performing control for suppressing an output variation of an existing wind power generator (s) using a storage battery device in such a manner that an output variation (rate) of an expanded wind-power generating station (a wind-power generating station after additionally installing a wind power generator(s) in the existing wind-power generating station) does not exceed an output variation (rate) estimated with respect to an existing wind-power generating station, or performing control for suppressing an output variation (rate) indicative of the sum based on the existing and additionally installed wind power generators, using the storage battery device in such a manner that the output variation (rate) of the expanded wind-power generating station becomes less than or equal to the output variation (rate) of the existing wind-power generating station.

More specifically, the object of the present invention is achieved by the configuration as defined in claims.

[Advantageous Effects of Invention]

According to the present invention, it is possible to suppress an increase in output variation involved in additional installation of a wind power generator(s) to prevent a load of an electric power company from increasing and to suppress an increase in output variation involved in additional installation of a wind power generator (s) without the need for a large storage battery capacity (i.e., at low cost) to avoid an increase in the load of a wind power generation producer.

[Brief Description of Drawings]

FIG. 1 is a diagram illustrating a configuration of a wind power generation system according to a first embodiment of the present invention;

FIG. 2 is a diagram for describing a method of calculating upper and lower limits of a permissible output width in the first embodiment of the present invention;

FIG. 3 is a diagram for describing charge/discharge control and a generated power limiting method for a wind power generator in the first embodiment of the present invention;

FIG. 4 is a diagram for describing studied results of comparison of a cumulative frequency of the frequency of occurrence relative to each output variation rate in connection with the first embodiment of the present invention;

FIG. 5 is a diagram for describing simulation results in the first embodiment of the present invention;

FIG. 6 is a diagram illustrating a configuration of a wind power generation system according to a second embodiment of the present invention; and

FIG. 7 is a diagram for describing studied results of comparison of a cumulative frequency of the frequency of occurrence relative to each output variation rate in connection with the second embodiment of the present invention.

[Description of Embodiments]

Preferred embodiments of the present invention will hereinafter be described using the accompanying drawings.

The basic concept of the present invention will be described by taking for example the case where wind power generator are additionally installed in an already-existing wind-power generating station with no execution of output variation control.

Increasing the introduced number of wind power generators as described above leads to increasing the output variation supplied to an electric power system. In particular, an increase in the output variation at a period from a few minutes to twenty minutes or so called a middle periodic region is in danger of causing a shortage of adjusting power in the electric power system and an expansion of a frequency fluctuation. The limit of the adjusting power (load frequency control) becomes a large factor for calculating a possible interconnecting power amount.

Thus, if upon additional installation of a wind power generator (s), the output variation in the middle periodic region is suppressed, i.e., the output variation in the middle periodic region of the wind-power generating station after the additional installation of the wind power generator (s) is not made larger than the output variation in the middle periodic region of the existing wind-power generating station, no burden is placed on the electric power company in particular, thus causing a high possibility that the electric power company will accept the additional installation of the wind power generator (s) as with the occasional reception.

From this point of view, in the present invention, an output variation at a middle period (e.g., 20 minutes) in the existing wind-power generating station is actually measured, and the output of the wind-power generating station after the additional installation of a wind power generator(s) is controlled in such a manner that the output variation at a middle period (e.g., 20 minutes) of the wind-power generating station after the additional installation of wind power generator (s) is not made larger than the measured output variation of the existing wind-power generating station. If a factor to calculate a possible interconnecting power amount with an electric power system is an output variation other than the middle periodic region, an output variation in the periodic region is actually measured, and the output variation in the periodic region is suppressed. A description will be made below of as an example the case where the output variation in the middle periodic region that greatly affects the electric power system under the present situation is suppressed.

Further, it is important for a wind power generation producer to achieve the suppression of an increase in the output variation involved in the additional installation of the wind power generator(s) efficiently (at low cost). The present inventors first have studied whether or not an output variation of a wind-power generating station after the additional installation of the wind power generator(s) does not exceed an output variation of an existing wind-power generating station, depending on how the former output variation is dealt with. In other words, the present inventors have studied an effective plan for the additional installation of the wind power generator(s).

As a method for preventing the output variation of the wind-power generating station after the additional installation of the wind power generator (s) from exceeding the output variation of the existing wind-power generating station, there is considered that the existing wind power generators remain kept and the output variation is prevented from occurring with respect to the additionally installed wind power generator (s). To this end, there is a need to perform control in such a manner that an output variation (rate) corresponding to the additionally installed wind power generator (s) becomes approximately zero. This is similar to the case where an output constant control type wind power generation facility is newly provided. It is thus necessary to prepare a storage facility commensurate with the rated output of the additionally installed wind power generator(s). Expanding the wind power generators at low cost is considered to be difficult under the present situation. This is realized in the case where the total generated output of the additionally installed wind power generator (s) is 1% or less with respect to the total generated output of existing wind power generators, where small-sized wind power generators are additionally installed, and the like.

The present inventors have paid attention to the case where a given degree of output variation is allowed for the existing wind-power generating station. The present inventors have found that if the output of the expanded wind-power generating station (a wind-power generating station after additionally installing a wind power generator(s) in the existing wind-power generating station) is controlled on the basis of the output variation allowed for the existing wind-power generating station, the wind power generator(s) can be additionally installed at low cost. A basic concept of a plan for the additional installation of the wind power generator (s) will next be explained based on such a thought.

(1) An output variation (rate) of the existing power generators (the existing wind-power generating station) is first determined. As to the output variation, an output width between the maximum and minimum values of an output for a middle period (e.g. 20 minutes) is determined every minute. For example, an output width between the maximum and minimum values of an output between 07: 00 and 07:20 is determined. Next, an output width between the maximum and minimum values of an output between 07:01 and 07:21 is determined. Output widths between the maximum and minimum values of outputs between 20 minutes are sequentially determined every minute. When the output variation of the existing wind-power generating station and the output variation of the expanded wind-power generating station are compared with each other, they are compared based on the widths of the output variations or compared at output variation rates with the total generated output of the expanded wind-power generating station as a denominator (although they can also be compared at output variation rates with the rated output of the existing wind power generator as a denominator, the following description will be made using an output variation rate with the total generated output of the expanded wind-power generating station as a denominator, i.e., an output variation rate calculated with the sum of the rated output of existing wind power generators and the rated output of additionally installed wind power generator(s) as a denominator). Based on the definition of the output variation rates, the output variation rate of the expanded wind-power generating station is controlled not so as to be larger than the output variation rate of the existing wind-power generating station.

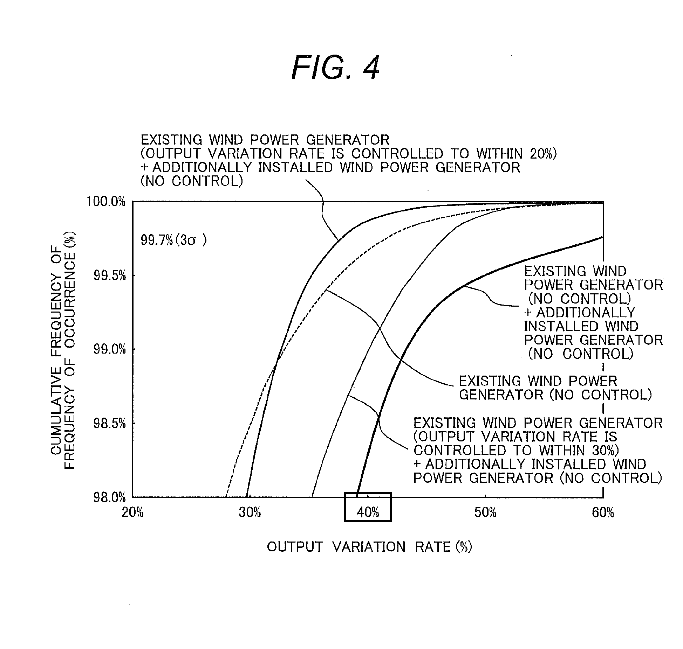

Data about the output variations (rates) during this middle period are stored during a given period, and the cumulative frequency of the frequency of occurrence relative to each output variation (rate) is determined. FIG. 4 describes the cumulative frequency of the frequency of occurrence relative to each output variation rate. It is understood in FIG. 4 that since the cumulative frequency of the frequency of the occurrence becomes 99.7% (numerical value of 3σ approximately set to 100% statistically) when the output variation rate is 40%, the output variation rate of the existing wind power generators (the existing wind-power generating station) is 40%.

(2) Next, an output variation (rate) of the additionally installed wind power generator (s) is estimated if control for suppressing an output variation is not performed on the additionally installed wind power generator(s). Since a locational point of each wind power generator is the same region even in terms of existing and additionally installed forms, the output of the additionally installed wind power generator can be estimated to vary in a proportion similar to the existing wind power generator. Since the output variation can be estimated based on actually-measured data of the existing wind power generator, a higher accurate calculation is enabled as compared with a wind-power generating station is newly provided at a new point. Since the accuracy of the output variation of the additionally installed wind power generator(s) can be estimated high, the storage capacity of a storage facility required for the expanded wind-power generating station can be determined highly accurately and a storage facility having an excessive capacity can be avoided. As a result, the low cost is enabled.

(3) Then, the output is controlled in such a manner that the output variation (rate) of the wind-power generating station after the additional installation of the wind power generator (s) does not exceed the output variation (rate) of the existing wind-power generating station. That is, a target value for the output variation (rate) under output control on the expanded wind-power generating station is calculated on the basis of the output variation (rate) of the existing wind power generator and the output variation (rate) of the additionally installed wind power generator (s). Upon this output control, storage facilities are provided side by side to perform the control. The capacity of the storage facility is determined in consideration of the output variation (rate), the target value and the like. As to how to perform the output control, the following two controls are considered.

As one control, the control for suppressing the output variation corresponding to the existing wind power generators using the storage facility is performed in such a manner that the output variation (rate) of the expanded wind-power generating station (a wind-power generating station after additionally installing a wind power generator(s) in the existing wind-power generating station) falls below the output variation (rate) determined with respect to the existing wind power generators (the existing wind-power generating station). In this case, control for suppressing the output variation of the additionally installed window power generator(s) is not performed. This control is to, in other words, suppress and control the output variation of the existing wind power generators using the storage facility in such a manner that the output variation (rate) of the existingwindpower generators in the expanded wind-power generating station reaches a difference or less between the output variation (rate) determined with respect to the existing wind power generator (s) (the existing wind-power generating station) and the output variation (rate) of the additionally installed wind power generator(s) in the expanded wind-power generating station. When, for example, the rated output of the existing wind power generators is assumed to be 10MW, and the rated output of the additionally installed wind power generators is assumed to be 5MW, the output variation of the additionally installed wind power generators can be estimated to be 3MW (output variation rate: 20% at 3/15) where the output variation of the existing wind power generators (the existing wind-power generating station) is determined as 6MW (output variation rate:40% at 6/15). Therefore, the suppression control is performed using the storage facility in such a manner that the output variation of the existing wind power generators in the expanded wind-power generating station reaches an output variation less than or equal to 3MW (output variation rate: 20% or less at 3/15) of the difference. Thus, in this system, since the output control is performed using the output variation recognized at the existing wind-power generating station, the capacity of the storage facility can be reduced as compared with the case where an output-constant control type wind-power generating station (5MW wind-power generating station in the above example) is newly provided. Since the storage facility can be prepared based on the highly accurate output variation determined at the existing wind-power generating station, a storage facility having an excessive capacity can be avoided.

As another output control, the control for suppressing the output of the expanded wind-power generating station, i.e., the output variation equivalent to the sum of that for the existing wind power generator (s) and that for the additionally installed wind power generator(s), using the storage facility in such a manner that the output variation (rate) of the expanded wind-power generating station reaches less than or equal to an output variation (rate) of the existing wind power generator(s) (the existing wind-power generating station). When, for example, the rated output of the existing wind power generators is assumed to be 10MW, and the rated output of the additionally installed wind power generators is assumed to be 5MW, the output variation of the additionally installed wind power generators can be estimated to be 3MW (output variation rate: 20% at 3/15) where the output variation of the existing wind power generators (the existing wind-power generating station) is determined as 6MW (output variation rate:40% at 6/15). Thus, in the expanded wind-power generating station, the suppression control is performed using the storage facility in such a manner that an estimated output variation of 9MW (output variation rate of 60%) falls within an output variation of 6MW (output variation rate of 40%). Even in this case, since the output control is performed using the output variation recognized at the existing wind-power generating station, the capacity of the storage facility can be reduced as compared with the case where an output-constant control type wind-power generating station is newly provided. Since the storage facility can be prepared based on the highly accurate output variation determined at the existing wind-power generating station, a storage facility having an excessive capacity can be avoided.

Concrete methods of output control will next be explained.

As a wind-power generating station in which storage batteries (storage systems) are provided side by side, there has been known one described in, for example, Japanese Patent Laid-Open No. 2007-124780 (PTL3). The PTL 3 describes a method of providing a predetermined range with respect to an average value of generated power of a wind power generator and performing charging/discharging of the storage system only upon departing from this range. As described above, an increase in the output variation at a period from a few minutes to twenty minutes or so called a middle periodic region is in danger of causing a shortage of adjusting power in the electric power system and an expansion of a frequency fluctuation. In the present embodiment, in order to suppress the output variation at the middle period in terms of the foregoing, the output variation at the middle period is determined, followed by suppression of this variation. In the method described in the PTL 3, a simple output target value called an average value of a generated output is used to reduce an output variation. Therefore, it is considered that there is a need to set small the predetermined range relative to the average value in order to reliably perform variation suppression in the middle periodic region. In this case, however, actually, needless charging/discharging that does not contribute to the relaxation (reduction) of variations in the middle periodic region occurs, thus resulting in an increase in the power loss. There also exists a possibility that due to the needless charging/discharging, the life cycle of each storage battery will be reduced, and the storage battery will be exchanged within the period of the operation of the wind-power generating station.

The present applicant (assignee) has proposed a method of effectively suppressing an output variation in a middle periodic region to the PTL 2(Japanese Patent No. 4551921, corresponding to EP2230403A1 and US2009/0295162A1). The contents of Japanese Patent No. 4551921, EP2230403A1 and US2009/0295162A1 are hereby incorporated by reference into this application. In the present embodiment, the control described in the paragraph (3) above is carried out using the method described in the PTL 2. Using the method described in the PTL 2 makes it possible to reliably suppress the output variation in the middle periodic region, reduce a loss with the charge/discharge of the storage battery and make the operation of extending the life cycle of each storage battery.

Points of the wind power generation system described in the PTL 2 are the following A) through C).

A) Apermissible output width after a given constant period in the next future is determined from the maximum and minimum values of the sum (system output) of the outputs of a wind power generator group, which is target for the suppression of an output variation, and a storage battery device group during a certain predetermined period of time from the present to the past.

B) A charge command is issued to the storage battery device group when the generated output of the wind power generator group target for the relaxation (reduction) of the output variation is larger than the upper limit value of the permissible output width after the given constant period in the next future, a discharge command is issued to the storage battery device group when the generated output is smaller than the lower limit value of the permissible output width, and a charge/discharge free command is issued to the storage battery device group when the generated output falls within the permissible output width, respectively, whereby charge/discharge control is performed.

C) When the wind power generator group has a windmill output limiting function, a windmill output limit command is issued after the given constant period in the next future when the generated output of the wind power generator group target for the relaxation of the output variation is larger than the upper limit value of the permissible output width even if the generated output is charged into the corresponding storage battery device.

The control method of the PTL 2 is capable of realizing "technical requirement on wind power generation facility" required of a wind power generation producer when Tohoku Electric Power Co., Inc. solicits wind power generation, for example. In "technical requirement on wind power generation facility", it is required that "the difference between the maximum value and the minimum value" of a system output (average value of each one minute) subsequent to variation measures during 20 minutes starting with an arbitrary time, that is, a target value of an output variation (rate) is less than or equal to 10% of the rated output of the wind power generators (wind power generation facility). Using such an output variation suppression control method for the middle periodic region in the control described in the paragraph (3) makes it possible to reliably control an output variation (rate) of a wind-power generating station after additional installation of a windpower generator(s) so as not to exceed an output variation (rate) of an existing wind-power generating station, reduced a loss with the charge/discharge of each storage battery and make the operation of extending the life cycle of the storage battery.

Preferred embodiments of a wind power generation system to which the control method described in the PTL 2 is applied will next be explained.

[First embodiment]

As the control described in the above paragraph (3), the present embodiment aims to suppress and control variations in the outputs of already-existing wind power generator (s) using a storage facility in such a manner that the output variation (rate) of a post-expansion wind-power generating station (a wind-power generating station after additionally installing a wind power generator(s) in the already-existing wind-power generating station) reaches less than or equal to an output variation (rate) determined with respect to the already-existing wind power generator(s) (already-existing wind-power generating station).

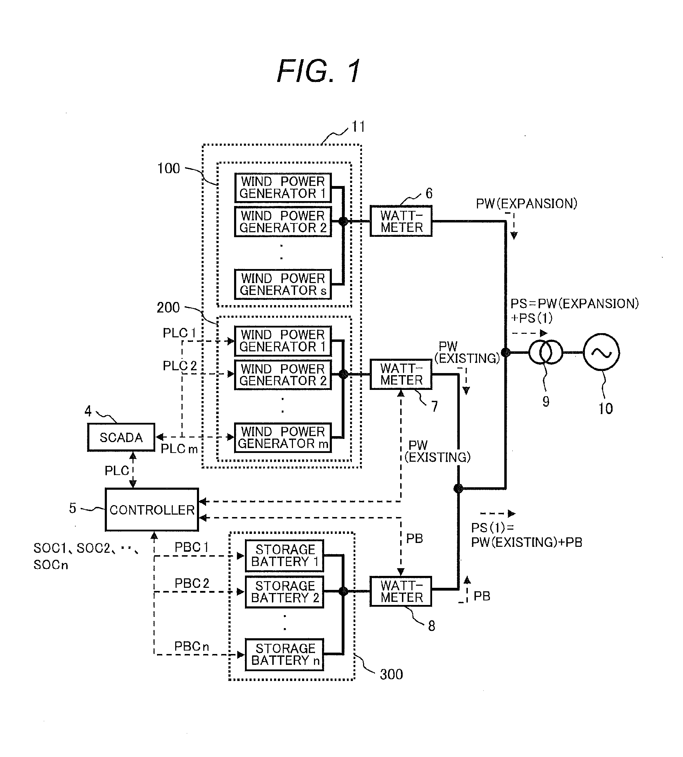

A configuration of a wind power generation system according to the present embodiment is illustrated in FIG. 1. The wind power generation system according to the present embodiment is made up of an additionally installed wind power generator group 100, an existing wind power generator group 200, a storage battery device group 300, a wind power generator SCADA 4, and a controller 5. The wind power generator SCADA 4 assumes the role of collecting operation information about operating conditions of each wind power generator and its generated power, etc. and has the function of applying a power limit command to each wind power generator. This wind power generation system is linked to a power system 10 and transmits the generated power of a post-expansion wind-power generating station 11 to the power system 10. Wattmeters 6 and 7, which respectively measure generated power PW (expansion) and PW (existing), are respectively installed in linkage points of the additionally installed wind power generator group 100 and the existing wind power generator group 200. A wattmeter 8 that measures charge/discharge power PB of the storage battery device group 300 is installed in a linkage point of the storage battery device group 300.

In the present embodiment, the existing wind power generator group 200 is target for the relaxation (reduction) of output variations. The following relational expression is established between a system output PS (1) of the existing wind power generator group 200, PW (existing) and PB:

$$PS~(1)~=~PW~(existing)~+~PB \qquad\qquad \ldots~(1)$$

The following relational expression is established with respect to a power-generating station system output PS of the wind power generation system that supplies electric power to the power system 10:

$$PS~=~PS~(1)~+~PW~(expansion) \qquad\qquad \ldots~(2)$$

Thus, in order to achieve the object of the present invention, the following relational expression of (3) needs to be established when an output variation rate (or output variation) in PS is compared with the output variation rate (or output variation) which PW (existing) of the existing wind power generator group 200 has conventionally possessed or has been allowed. Incidentally, here, the output variation rate is expressed by taking the sum of a rated output of the additionally installed wind power generator group 100 and a rated output of the existing wind power generator group 200 as a denominator. Accordingly, this is the same even when expressed in the form of the output variation rate and the output variation (output variation width). The following description will be made using the output variation rate.

$$
\begin{aligned}
&\text{output variation rate (PW (existing))} \geq \text{output variation} \\
&\text{rate (PS)} = \text{output variation rate (PS (1))} + \text{output variation} \\
&\text{rate (PW (expansion))} \qquad \ldots~(3)
\end{aligned}
$$

Accordingly, the equation (3) results in the following equation (3'):

$$
\begin{aligned}
&\text{output variation rate (PW (existing))} - \text{output variation} \\
&\text{rate (PW (expansion))} \geq \text{output variation rate (PS (1))} \\
&\qquad\qquad\qquad\qquad\qquad\qquad\qquad\qquad \ldots~(3')
\end{aligned}
$$

In view of the foregoing, in the wind power generation system in which the wind power generator group targeted for the relaxation or suppression of the output variation is configured as the existing wind power generator group 200, it is necessary to suppress the output variation rate (PS (1)) to a difference or less between the output variation rate originally held by the existing wind power generator group 200 and the output variation rate of the additionally installed wind power generator group 100 by relaxing the output variation of the existing wind power generator group 200 in the post-expansion wind-power generating station with the charge/discharge control of the storage battery device group 300.

The controller 5 that conducts this suppression control will next be explained. Main functions have been described in the above paragraphs A) through C). As the function/operation of the controller 5, the controller 5 sets a permissible output width to enable efficient charge/discharge control. Further, the controller 5 outputs a charge/discharge command to each storage battery while grasping the SOC (State Of Charge) of each storage battery to enable charging/discharging at all times when the permissible output width is deviated. Applying the present controller 5 makes it possible to reduce as much as possible needless charging/discharging that does not contribute to the relaxation of variations and avoid a reduction in the life cycle of each storage battery, a loss of a power converter with the charge/discharge, and an internal loss of each storage battery. A description will now be made of the case where the output variation control is performed with 20 minutes as a period in consideration of a middle periodic region having a significant impact on the power system.

A) Calculation of permissible output width (upper and lower limits)

A target output variation rate is first calculated. 10% or less of the rated output of the wind power generator group has been set as a target for the output variation in the PTL 2. The present embodiment however aims to enhance only the rated output while the output variation rate remains unchanged when the additionally installed wind power generator group 100 is added to the existing wind power generator group 200. The present embodiment is therefore different from the Patent Document 2 in terms of the target output variation rate.

The output variation rate relative to 20 minutes, of the existing wind power generator group (existing wind-power generating station) is determined as described in the above paragraph (1) and expressed as X% (X = output variation of existing wind-power generating station ÷ rated output of post-expansion wind-power generating station (= rated output of existing wind power generator group + rated output of additionally installed wind power generator group)). The output variation rate relative to 20 minutes, of the additionally installed wind power generators in the additionally installed wind power generator group is calculated as described in the above paragraph (2) and expressed as Y% (Y = output variation of additionally installed wind power generator group ÷ rated output of post-expansion wind-power generating station (= rated power of existing wind power generator group + rated output of additionally installed wind power generator group)).

Thus, the target output variation rate of the system output (PS (1)) of the existing wind power generator group in the post-expansion wind-power generating station becomes (X - Y) % or less. In other words, making use of the output variation rate X% which has conventionally been held (allowed for) by the existing wind power generator group 200, the system output PS (1) of the existing wind power generator group 200 is controlled aiming the output variation rate (X - Y)% or less as a target.

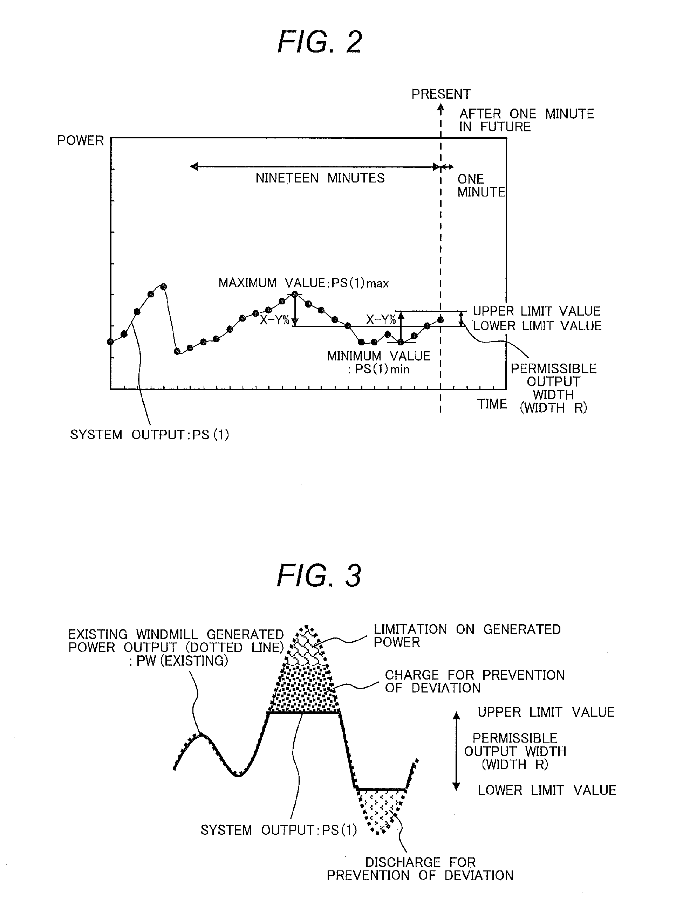

Next, as shown in FIG. 2, a numeric value obtained by adding (X - Y)% to the minimum value PS (1) min of the system output PS (1) corresponding to 19 minutes (determined corresponding to a period (20-minute period) target for the relaxation of output variation) past from the current time is set as the upper limit of a permissible output width R. A numeric value obtained by subtracting (X - Y)% from the maximum value PS (1)max corresponding to 19 minutes past from the current time of the system output PS (1) is set as the lower limit of the permissible output width R, whereby the permissible output width is set. Setting the permissible output width R in this way makes it possible to reliably suppress an output variation in target period.

B) Charge/discharge control of storage battery device group

The charge/discharge power PB of the storage battery device group 300 is adjusted in such a manner that the system output PS (1) after one minutes (corresponding to the end of a period target for the relaxation of output variation) has elapsed from the current time falls within the permissible output width R. When the generated power of the existing wind power generator group 200 target for the relaxation of the output variation exceeds the upper limit value of the permissible output width R, the controller 5 instructs the storage battery device group 300 to perform charge control. When the generated power thereof falls below the lower limit value of the permissible output width R, the controller 5 instructs the storage battery device group 300 to perform discharge control. Further, when the generated power falls within the permissible output width R, the controller 5 issues a standby command to the storage battery device group 300. Charge/discharge-controlling the storage battery device group 300 in this way makes it possible to suppress the output variation rate relative to 20 minutes in the system output PS (1) of the existing wind power generator group 200 target for the output variation control to (X - Y)% or less at all times and reduce charge/discharge power energy of each storage battery. In order to perform the charge/discharge control smoothly, the function of adjusting a state of charge of each storage battery is also provided as described in the PTL 2. The storage battery device group 300 needs to issue a command to each storage battery while dispersing the charge/discharge power PB into PBC1 through PBCn. As described in the PTL 2, this command is issued on the basis of the state of charge (SOC) of each storage battery and set in such a manner that the discharge control is performed from the storage battery high in SOC and the charge control is performed from the storage battery low in SOC. The function of grasping the states of charge SOC1 through SOCn of the storage batteries under the present situation is provided to issue this command.

C) Generated power limit command for wind power generator

When the wind power generator group has a windmill output limiting function, as shown in FIG. 3, a generated power limit command is issued after a certain predetermined period in the next future when the generated output of the wind power generator group target for the relaxation of the output variation is larger than the upper limit value of the permissible output width R even if the generated output is charged into the storage battery device group, i.e., charging power for giving a charge instruction to the storage battery device group is subtracted therefrom. This is effective in suppressing a sharp increase in the generated output of the wind power generator with an abrupt rise in the wind velocity in particular. The present function can be achieved by adjusting the pitch angle of each blade of the wind power generator and allowing wind energy to escape. It is thus desirable that it is not used in the effective use of natural energy as much as possible.

The existing wind power generator group 200 target for output variation control will be explained. The existing wind power generator group 200 is made up of a plurality of wind power generators, and a wind power generator SCADA 4. The wind power generator SCADA 4 assumes the role of collecting operation information about operating conditions of the existing wind power generator group 200 and its generated output, etc. At the same time, the wind power generator SCADA 4 has the function of receiving a command PLC for limiting the generated power of the existing wind power generator group 200 from the controller 5 and applying power limit commands PLC1, PLC2, ... PLCm to the individual wind power generators in such a manner that the sum of generated power of the individual wind power generators becomes PLC or less. Incidentally, since the additionally installed wind power generator group 100 does not require output variation control although it also basically takes a similar configuration with the existing wind power generator group 200, the additionally installed wind power generator group 100 needs not to have the wind power generator SCADA 4 and the controller 5. When there is no generated power limiting function, the wind power generator SCADA 4 does not receive from the controller 5, such a command that the generated power of the existing wind power generator group 200 reaches PLC or less. When the generated power limning function exists, the output variation control can reliably be conducted.

The wind power generator that configures the additionally installed wind power generator group 100 and the existing wind power generator group 200 will next be described. In the wind power generator, synchronous generator lying inside the wind power generator is linked to a power system via AC-DC converter and converter as described in the PTL 2. Any of the applied wind power generators is capable of variable speed operation by adjusting a power converter and the pitch angle of each blade. These windpower generators are respectively capable of limiting their generated power to a predetermined value or less by combining control on the pitch angles and control on the power converters. This function enables the generated power limit command described above. Although the wind power generators include a DC-excited synchronous generator, an AC-exited synchronous generator and a permanent magnet type synchronous generator as types, any of them can obtain a similar advantageous effect. Although the description has been made of as an example the case where the generator groups are respectively made up of a plurality of the existing wind generators or additionally installed wind power generators, the present invention can be applied even though they are respectively configured as single.

The storage battery device group 300 will next be explained. As described in the PTL 2, each of the storage batteries of the storage battery device group 300 is comprised of a plurality of secondary batteries, converters, linkage transformer, breakers, etc. and linked to the power system. The secondary battery to be applied is comprised of any one of types: a lead storage battery, a sodium-sulfur battery, a redox flow battery, a lithium ion battery, a nickel hydride battery, and a lithium ion capacitor or a combination of these. Even when the storage battery is made up of a form using an electric double-layer capacitor or a condenser as a capacitor instead of the secondary battery, or a combination of the secondary battery and the capacitor, or a combination of other storage elements, a similar advantageous effect is obtained. Even though a system such as a flywheel, SMES or the like capable of storing electrical energy as kinetic energy is used as the storage device, a similar advantageous effect can be obtained. The storage batteries measure SOC respectively and transfer their values to the controller 5. Although the storage batteries have been described with respect to the storage battery device group comprised of the plural storage batteries, the present invention can be applied even in the case of one storage battery.

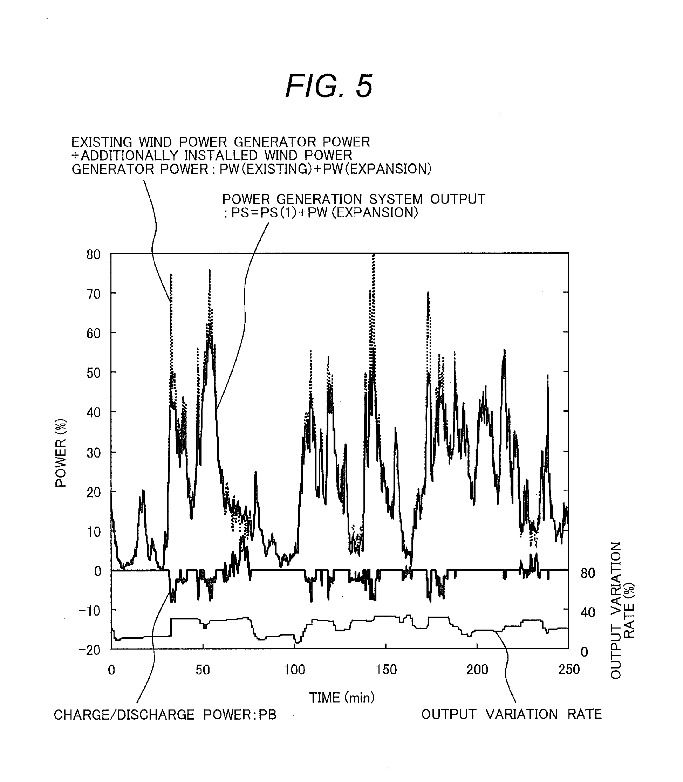

An example of the operation of the wind power generation system according to the present embodiment will next be explained. FIGS. 4 and 5 respectively illustrate results obtained by calculating by simulation, conditions of output variation control using the controller 5, the storage battery device group 300 and the generated power limitation on each wind power generator under the condition of the first embodiment. Incidentally, upon the calculation of this simulation, the generated power of the existing wind power generator group 200 is assumed to be 9.95MW, the generated power of the additionally installed wind power generator group 100 is assumed to be 4.60MW, and the capacity of the storage battery device group 300 is assumed to be about 8% of the rated output of the post-expansion wind-power generating station (14.55MW). About the existing wind power generators, data obtained from an actual wind-power generating station is used.

FIG. 4 illustrates a comparison of the cumulative frequency of the frequency of occurrence relative to each output variation rate. An evaluation point of this drawing is to make a comparison with the frequency of occurrence of an output variation rate 40% of the existing wind power generator group 200 in the existing wind-power generating station. A condition for the cumulative frequency greater than it becomes effective. A relationship between the output variation rate of the existing wind power generator and the cumulative frequency of the frequency of its occurrence in the present drawing is calculated using the data of the actual wind-power generating station. As is apparent from FIG. 4, it is understood that since the output variation rate of the existing wind power generators is 40% where the cumulative frequency of the frequency of occurrence reaches 99.7% (numerical value of 3σ assumed to be almost 100% statistically), the output variation rate of the existing wind power generator group 200 in the existing wind-power generating station is determined as 40%. Next, a relationship between the output variation rate (output variation rate of existing wind power generator (no control) + additionally installed wind power generator (no control)) after the introduction of the additionally installed wind power generator group 100 and the cumulative frequency is calculated. As a result, it is understood that the output variation rate at which the cumulative frequency of the frequency of occurrence becomes 99.7% is 56%, thus resulting in increases not only in the rated output but also in the output variation rate with an increase in the number of wind power generators if this state remains held (the output control remains non-conducted). Therefore, a relationship between the output variation rate and the cumulative frequency where the existing wind power generator group 200 is operated in such a manner that the system output PS (1) of the existing wind power generator group 200 falls within output variation rates of 20% and 30% is calculated, and thereby an output variation rate at which the cumulative frequency of the frequency of occurrence is 99.7% is determined. As a result, it is understood that when the wind power generation system is operated in such a manner that the system output PS (1) of the existing wind power generator group falls within the output variation rate of 20%, the output variation rate of the wind power generation system after the additional installation reaches the output variation rate or less of the existing wind power generator group 200 in the existing wind-power generating station.

FIG. 5 illustrates the sum (PS (existing) +PW (expansion)) of generated power of the existing wind power generator group 200 and the additionally installed wind power generator group 100, the system output PS of the wind-power generating station, the charge/discharge power PB of the storage battery device group 3, and the output variation rate of the whole wind-power generating station. FIG. 5 is a simulation result at which the output variation limiting operation is conducted in such a manner that the output variation rate of the existing wind power generator group 200 reaches 20%, based on the result of FIG. 4. It is understood from FIG. 5 that when the existing wind power generator group 200 is operated so as to fall within an output variation rate of 20% by the output variation control using the controller 5, the storage battery device group 300 and the generated power limitation of each wind power generator, the output variation rate in the output of the post-expansion wind-power generating station 11 reaches 40% or less. From the present simulation result, there is obtained a result that as a result of calculation of the life cycle of the storage battery device group 300 on the basis of the number of charge/discharge cycles, the life cycle of the storage battery device group 300 can be expected to extend over 17 years longer than expected from a possible year of application, and the amount of loss of power with the charge/discharge control becomes significantly small like 1.7%.

From the foregoing, the existing wind power generator group 200 is operated so as to fall within the output variation rate of 20% under the output variation control using the controller 5, the storage battery device group 300 whose capacity is as very low as about 8% of the rated output of the wind-power generating station after the additional installation. Thus, the object of the present invention, that is, the output variation rate of the power-generating station system output PS can be brought to less than or equal to or the same level as the output variation rate of the existing wind power generator group 200 in the existing wind-power generating station, and only the total generated output can be increased efficiently.

Incidentally, although the above embodiment has explained the example in which the evaluation has been done by causing each wind power generator to have the output liming function regardless of the existing and expansion forms, all the individual wind power generators need not to have the output limiting function, and any one of the wind power generators may be allowed to have the output limiting function. Further, if a configuration having the function of switching operating and stop states between the individual wind power generators to thereby limit the generated power to less than or equal to a predetermined value as the entire wind power generator group is taken instead of the output limiting function, a similar advantageous effect can be obtained.

Although the present embodiment has described the power variation target for the variation relaxation (reduction) by taking for example the output variation in the middle periodic region (output variation in the frequency band for 20 minutes or so in the present embodiment), the frequency band to be subject to the variation relaxation (reduction) differs every power system. Therefore, control constants are changed depending on the power systems, thereby making it possible to achieve the advantageous effect of the present invention in like manner.

[Second embodiment]

A description will next be made of a wind power generation system which performs, as the output control described in the above paragraph (3), control for suppressing the output variation of a post-expansion wind-power generating station, i.e., an output variation equivalent to the sum of that for each existing wind power generator and that for each additionally installed wind power generator, using a storage facility in such a manner that an output variation (rate) of the post-expansion wind-power generating station reaches less than or equal to an output variation (rate) of the existing wind power generator (existing wind-power generating station).

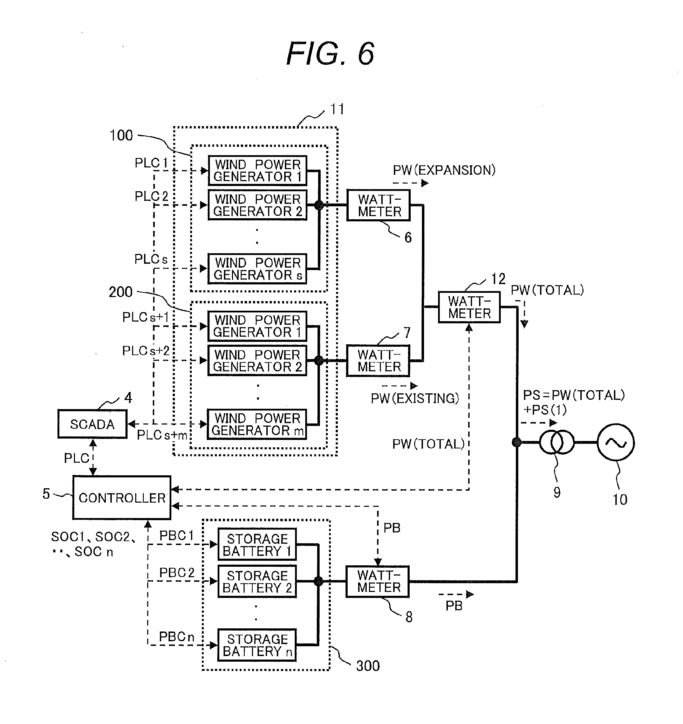

A configuration of the wind power generation system targeted for the present embodiment is illustrated in FIG. 6. The wind power generation system according to the present embodiment is basically approximately similar to FIG. 1, but different therefrom in that wind power generators which perform output variation control operation are directed to an additionally installed wind power generator group 100 and an existing wind power generator group 200, and a wattmeter 12 which measures the total generated power of the two is provided. Although the wattmeters 6, 7 and 12 are provided in the present embodiment, the wattmeters 6 and 7 may be omitted when the wattmeter 12 is installed. It is also possible to omit the wattmeter 12 when the wattmeters 6 and 7 are provided.

In the present embodiment, the total generated output PW (total) of the additionally installed wind power generator group 100 and the existing wind power generator group 200 is target for relaxation or suppression of output variations. The following relational expression is established between the total generated output PW (total), PW (existing) and PW (expansion):

$$PW \ (total) \ = \ PW \ (existing) \ + \ PW \ (expansion) \ \ \ ... \ (4)$$

The following relational expression is established with respect to a power-generating station system output PS of the wind power generation system that supplies electric power to the power system 10:

$$PS \ = \ PW \ (total) \ + \ PB \ \ \ \ \ \ \ \ ... \ (5)$$

Thus, in order to achieve the object of the present invention, the following relational expression needs to be established when an output variation rate in the power-generating station system output PS is compared with the output variation rate which PW (existing) of the existing wind power generator group 200 has conventionally possessed (output variation rate of existing wind-power generating station).

$$output \ variation \ rate \ (PW \ (existing)) \geq output \ variation$$
$$rate \ (PS) \ \ \ \ \ \ \ \ \ ... \ (6)$$

Accordingly, the equation (6) results in the following equation (6'):

$$output \ variation \ rate \ (PW \ (existing)) \geq output \ variation$$
$$rate \ PW \ (total) \ + \ PB \ \ \ \ \ \ \ ... \ (6')$$

In view of the foregoing, the wind power generation system in which the wind power generator groups each targeted for the relaxation of the output variation are taken as the existing wind power generator group 200 and the additionally installed wind power generator group 100 needs to relax the output variation in the total generated output PW (total) of the existing wind power generator group 200 and the additionally installed wind power generator group 100 by the charge/discharge control of the storage battery device group 300 and thereby bring the output variation rate to an output variation rate (PS) less than or equal to the output variation rate originally held by the existing wind power generator group 200.

The respective contents of the function of the controller 5, the existing wind power generator group 200, the additionally installed wind power generator group 100, each individual wind power generator and the storage battery device group 300 are basically approximately similar to the first embodiment.

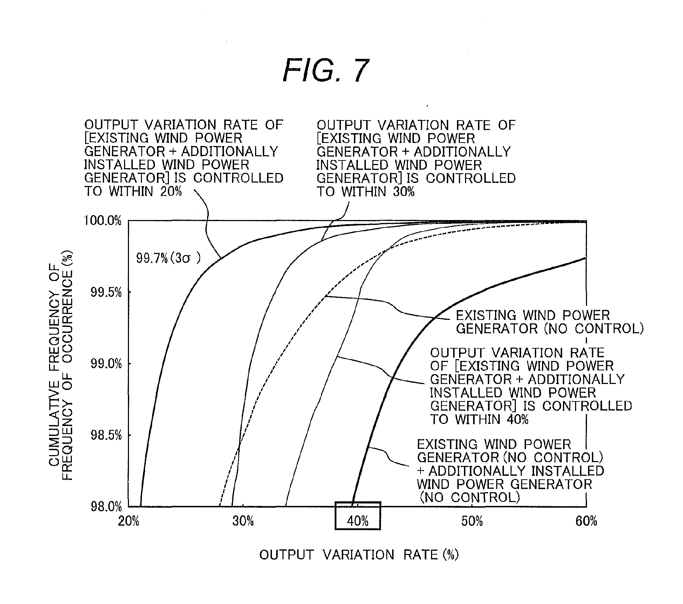

An example of the operation of the wind power generation system according to the present embodiment will next be described. FIG. 7 is a result obtained by calculating by simulation, conditions of output variation control using the controller 5, the storage battery device group 3 and the generated power limitation of each wind power generator under the condition of the second embodiment. Incidentally, as with the first embodiment even at this simulation, the generated power of the existing wind power generator group 200 is assumed to be 9.95MW, the generated power of the additionally installed wind power generator group 100 is assumed to be 4.60MW, and the capacity of the storage battery device group 300 is assumed to be about 8% of the rated output of the post-expansion wind-power generating station (14.55MW).

FIG. 7 illustrates a comparison of the cumulative frequency of the frequency of occurrence relative to each output variation rate. An evaluation point of this drawing is also to make a comparison with the frequency of occurrence of an output variation rate 40% of the existing wind power generator group 200 in the existing wind-power generating station as with FIG. 4. A condition for the cumulative frequency greater than it becomes effective. A relationship between the output variation rate and the cumulative frequency where the wind power-generating station system is operated in such a manner that the output variation in the total generated output of the additionally installed wind power generator group 100 and the existing wind power generator group 200 are relaxed by the charge/discharge of the storage battery device group 300, and the output variation rate in the power-generating station system output PS falls within 20%, 30% and 40%, is calculated to determine an output variation rate at which the cumulative frequency of the frequency of occurrence reaches 99.7%. As a result, it is understood that when the wind power-generating station system is controlled to suppress the output variation in the total generated output to the output variation rates of 20% and 30%, the output variation rate of the wind power-generating station system becomes less than or equal to the output variation rate of the existing wind power generator group 200 in the existing wind-power generating station. The life cycle of the storage battery device group 300 is also calculated from the simulation result on the basis of the number of charge/discharge cycles, so that the storage battery device group 300 can be expected to extend over 17 years longer than expected from a possible year of application. There has been obtained a result in which the amount of loss of power with the charge/ discharge control becomes significantly small, although slightly greater in the amount of power loss than in the first embodiment, as in the case where it is 2.1% when the wind power-generating station system is operated at the output variation rate of 30%, and 4.3% when the wind power-generating station system is operated at the output variation rate of 20%.

From the foregoing, the total generated output of the additionally installed wind power generator group 100 and the existing wind power generator group 200 is operated so as to fall within the output variation rate of 20% under the output variation control using the controller 5, the storage battery device group 300 whose capacity is as very low as about 8% of the rated output of the post-expansion wind-power generating station, and the generated power limitation of each wind power generator. Thus, the object of the present invention, that is, the output variation rate of the expansion-type wind-power generating station 11 can be brought to less than or equal to or the same level as the output variation rate of the existing wind power generator group 200 in the existing wind-power generating station, and only the total generated output can be increased efficiently.

Incidentally, regardless of the first and second embodiments, the storage battery device group 300 is as very low in capacity as about 8% of the rated output of the post-expansion wind-power generating station. However, the more the capacity increases, the easier to suppress an increase in the output variation with an increase in the number of wind power generators. On the other hand, however, it is not effective in terms of the cost because the cost of each storage battery increases. It is generally desirable to bring the storage battery device group 300 to 5 to 25% or so of the rated output thereof.

The above described embodiments of the invention as well as the appended claims and figures contain multiple features in specific combinations. The skilled person will consider other combinations or sub-combinations of these features in order to adapt the invention as defined in the claims to his specific needs.

**Claims**

1. A wind power generation system provided with at least one additionally installed wind power generator (100) in a wind-power generating station having at least one existing wind power generator (200), comprising:

   at least one storage battery device (300);
   a generated power detecting device (7), which is configured to detect a generated output of the existing wind power generator (200);
   a charge/discharge power detecting device (8), which is configured to detect a charge and discharge power of the storage battery device (300); and
   a control device (5), which is configured to receive signals output from the generated power detecting device (7) and the charge/discharge power detecting device (8), and to control a system output of the existing wind power generator (200), corresponding to the sum of the generated power of the existing wind power generator (200) and the charge and discharge power of the storage battery device (300), by adjusting the charge and discharge of the storage battery device (300) in such a manner that an output variation or output variation rate of the wind-power generating system at a predetermined period, during which the output variation or output variation rate is suppressed, becomes less than or equal to an estimated output variation or output variation rate of the existing wind power generator (200) of the wind-power generating station prior to being provided with the additionally installed wind power generator (100).

2. The wind power generation system according to claim 1, wherein the control device (5) is configured to adjust the charge and discharge of the storage battery device (300) in such a manner that an output variation or output variation rate of the system output of the existing wind power generator (200) becomes a difference or less between the estimated output variation or output variation rate of the existing wind power generator (200) and an estimated output variation or output variation rate of the additionally installed wind power generator (100).

3. The wind power generation system according to claim 1 or 2, wherein the control device (5) is configured to calculate the system output of the existing wind power generator (200) based on signals output from the generated power detecting device (7) and the charge/discharge power detecting device (8), to determine a maximum value and a minimum value of the system output of the existing wind power generator (200) during a first fixed period of time from the present to the past, corresponding to the predetermined period, to determine an upper limit of a permissible output width of the system output in a second fixed period of time from the present, which is the end of the predetermined period, by adding power corresponding to the difference between the estimated output variations or the estimated output variation rates to the minimum value, to determine a lower limit of the permissible output width by subtracting power corresponding to the difference between the estimated output variations or the estimated output variation rates from the maximum value, to compare the generated power of the existing wind power generator (200) with the upper and lower limits of the permissible output width, and to issue a charge/discharge command to the storage battery device (300) when the generated power of the existing wind power generator (200) deviates from the permissible output width.

4. The wind power generation system according to claim 3, wherein the control device (5) is configured to instruct the storage battery device (300) to stand by when the generated power of the existing wind power generator (200) falls within the permissible output width, to instruct the storage battery device (300) to perform charging when the generated power of the existing wind power generator (200) exceeds the upper limit of the permissible output width, and to instruct the storage battery device (300) to perform discharging when the generated power of the existing wind power generator (200) falls below the lower limit of the permissible output width.

5. The wind power generation system according to claim 3 or 4, wherein the at least one existing wind power generator (4) is configured to have an output limiting function, and wherein the control device (5) is configured to issue an output limit command to the existing wind power generator (4) having the output limiting function when the generated output of the existing wind power generator (200) at the end of the predetermined period exceeds the upper limit of the permissible output width even if charging power of the charge command to the storage battery device (300) is subtracted therefrom.

6. A wind power generation system provided with at least one additionally installed wind power generator (100) in a wind-power generating station having at least one existing wind power generator (200), comprising:

at least one storage battery device (300); a generated power detecting device (6, 7, 12), which is configured to detect a generated output of the existing wind power generator (200) and generated power of the additionally installed wind power generator (100); a charge/discharge power detecting device (8), which is configured to detect charge/discharge power of the storage battery device (300); and a control device (5), which is configured to receive signals output from the generated power detecting device (6, 7, 12) and the charge/discharge power detecting device (8), and to control a system output of the wind-power generating system, corresponding to the sum of the generated power of the existing wind power generator (200), the generated power of the additionally installed wind power generator (100), and the charge/discharge power of the storage battery device (300), by adjusting the charge/discharge of the storage battery device in such a manner that an output variation or output variation rate of the wind-power generating system at a predetermined period, during which the output variation or output variation rate is suppressed, becomes less than or equal to an estimated output variation or output variation rate of the existing wind power generator (200) of the wind-power generating station prior to being provided with the additionally installed wind power generator (100).

7. The wind power generation system according to claim 6, wherein the control device (5) is configured to calculate the system output based on signals output from the generated power detecting device (6, 7, 12) and the charge/discharge power detecting device (8),
to determine a maximum value and a minimum value of the system output during a first fixed period of time from the present to the past, corresponding to the predetermined period,
to determine an upper limit of a permissible output width of the system output in a second fixed period of time from the present, which is the end of the predetermined period, by adding power corresponding to the estimated output variation or the estimated output variation rate of the existing wind power generator to the minimum value,
to determine a lower limit of the permissible output width by subtracting power corresponding to the estimated output variation or the estimated output variation rate of the existing wind power generator (200) from the maximum value,
to compare the total generated power of the existing wind power generator (200) and the additionally installed wind power generator (100) with the upper and lower limits of the permissible output width, and
to issue a charge/discharge command to the storage battery device (300) when the total generated power deviates from the permissible output width.

8. The wind power generation system according to claim 7, wherein the control device (5) is configured to instruct the storage battery device (300) to stand by when the total generated power falls within the permissible output width,
to instruct the storage battery device (300) to perform charging when the total generated power exceeds the upper limit of the permissible output width, and
to instruct the storage battery device (300) to perform discharging when the total generated power falls below the lower limit of the permissible output width.

9. The wind power generation system according to claim 7, wherein at least one of the existing and additionally installed wind power generators is configured to have an output limiting function, and
wherein the control device (5) is configured to issue an output limit command to the wind power generator (4) having the output limiting function when the total generated output at the end of the predetermined period exceeds the upper limit of the permissible output width even if charging power of the charge command to the storage battery device (300) is subtracted therefrom.

10. A method for additional installation of a wind power generator in a wind power generation system, which increases the total generated power of the wind power generation system by additionally installing a new wind power generator (100) in the wind-power generating station having at least one existing wind power generator (200), the method comprising the steps of:

   determining an output variation or output variation rate in a middle periodic region in an existing wind-power generating station;
   estimating an output variation or output variation rate in the middle periodic region of the new wind power generator to be additionally installed, based on the output variation or output variation rate of the existing wind-power generating station; and
   planning a storage battery device (300) and a charge/discharge control device (8) for the storage battery device (300) in such a manner that the output variation or output variation rate of the wind-power generating station after the new wind power generator (100) has additionally installed does not exceed the output variation or output variation rate of the existing wind-power generating station.

# FIG. 1

## FIG. 2

## FIG. 3

# FIG. 4

EXISTING WIND POWER GENERATOR
(OUTPUT VARIATION RATE IS CONTROLLED TO WITHIN 20%)
+ ADDITIONALLY INSTALLED WIND POWER GENERATOR
(NO CONTROL)

99.7%(3σ)

EXISTING WIND
POWER GENERATOR
(NO CONTROL)
+ ADDITIONALLY
INSTALLED WIND
POWER GENERATOR
(NO CONTROL)

EXISTING WIND POWER
GENERATOR (NO CONTROL)

EXISTING WIND POWER GENERATOR
(OUTPUT VARIATION RATE IS
CONTROLLED TO WITHIN 30%)
+ ADDITIONALLY INSTALLED WIND
POWER GENERATOR (NO CONTROL)

CUMULATIVE FREQUENCY OF
FREQUENCY OF OCCURRENCE (%)

100.0%
99.5%
99.0%
98.5%
98.0%

20%   30%   40%   50%   60%

OUTPUT VARIATION RATE (%)

# FIG. 5

EXISTING WIND POWER GENERATOR POWER
+ADDITIONALLY INSTALLED WIND POWER
GENERATOR POWER : PW(EXISTING)+PW(EXPANSION)

POWER GENERATION SYSTEM OUTPUT
: PS=PS(1)+PW(EXPANSION)

CHARGE/DISCHARGE POWER:PB

OUTPUT VARIATION RATE

# FIG. 6

# FIG. 7

OUTPUT VARIATION RATE OF [EXISTING WIND POWER GENERATOR + ADDITIONALLY INSTALLED WIND POWER GENERATOR] IS CONTROLLED TO WITHIN 20%

OUTPUT VARIATION RATE OF [EXISTING WIND POWER GENERATOR + ADDITIONALLY INSTALLED WIND POWER GENERATOR] IS CONTROLLED TO WITHIN 30%

CUMULATIVE FREQUENCY OF FREQUENCY OF OCCURRENCE (%)

100.0%

99.7% (3σ)

99.5%

99.0%

98.5%

98.0%

20%    30%    40%    50%    60%

OUTPUT VARIATION RATE (%)

EXISTING WIND POWER GENERATOR (NO CONTROL)

OUTPUT VARIATION RATE OF [EXISTING WIND POWER GENERATOR + ADDITIONALLY INSTALLED WIND POWER GENERATOR] IS CONTROLLED TO WITHIN 40%

EXISTING WIND POWER GENERATOR (NO CONTROL) + ADDITIONALLY INSTALLED WIND POWER GENERATOR (NO CONTROL)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010051117 A
- JP 4551921 B
- EP 2230403 A1
- JP 2007124780 A
- US 20090295162 A1

**Non-patent literature cited in the description**

- Technical requirements on measures against frequency fluctuations of output-constant control type wind power generation facility. Tohoku Electric Power Co., Inc, 10 May 2011
- Japan Wind Development Co., Ltd. : Trajectory of JWD, First Stage to Fourth Stage. **ENDO AKIRA.** Wind Energy. Japan Wind Energy Association, May 2009, vol. 33, 15-21